# EUROPÄISCHE PATENTSCHRIFT

(11) **EP 2 971 813 B1**
(45) Veröffentlichungstag und Bekanntmachung des Hinweises auf die Patenterteilung: **12.07.2017**
(21) Anmeldenummer: 14705794.7
(22) Anmeldetag: 24.02.2014
(51) Int. Cl.: F16C 3/02

(54) **ANSCHLUSSVORRICHTUNG FÜR EINE WELLE**
CONNECTION DEVICE FOR A SHAFT
DISPOSITIF D'ACCOUPLEMENT POUR ARBRE

(30) Priorität: 12.03.2013 DE 102013204181
(43) Veröffentlichungstag der Anmeldung: 20.01.2016
(73) Patentinhaber: Bayerische Motoren Werke Aktiengesellschaft, 80809 München (DE)
(72) Erfinder: GRÜNWALD, Heinrich, 84032 Altdorf (DE); HOFSTETTER, Josef, 85395 Wimpasing (DE); REINDL, Johann, 84061 Ergoldsbach (DE); STREINZ, Wolfgang, 84034 Landshut (DE); ZEILNER, Armin, 84032 Pfettrach (DE)
(86) Internationale Anmeldenummer: PCT/EP2014/053522
(87) Internationale Veröffentlichungsnummer: WO 2014/139785

(56) Entgegenhaltungen:
- DE-A1- 19 842 821
- GB-A- 698 902
- US-A- 4 173 128
- US-A1- 2004 082 394

## Beschreibung

Die Erfindung betrifft eine Anschlussvorrichtung für eine Welle, die aus einem Endabschnitt eines Rohrsegments gebildet ist. Eine solche Anschlussvorrichtung ist z.B. aus der DE 198 42 821 bekannt. Bei der Entwicklung von neuen Teilen ist in verschiedenen Bereichen der Technik, insbesondere in der Fahrzeugtechnik, das Thema Leichtbau von besonderer Bedeutung. Hierbei spielen insbesondere Faserverbundwerkstoffe eine immer wichtigere Rolle. Diese werden zwischenzeitlich nicht nur für Karosseriebauteile, sondern auch beispielsweise für Wellen (Gelenkwellen) verwendet. Dabei ist es nötig, Faserverbundwerkstoff-Wellen, insbesondere aus CFK, mit Stahl- oder Aluminiumbauteilen zu verbinden. Im Falle einer Anschlussvorrichtung einer Gelenkwelle sind hohe Torsionsmomente zu übertragen, so dass entsprechend größere Dimensionierungen gewählt werden, die verhältnismäßig schwer sind.

Aus dem Stand der Technik ist bereits bekannt, derartige Verbindungen als Rändel-Verbindung zu gewährleisten, bei der Stahl- oder Aluminiumanbauteile mit großer Wandstärke in ein CFK-Rohr eingepresst und verklebt werden. Die Stahl- oder Aluminiumanbauteile sind rohrförmig und weisen im Stand der Technik eine Dicke von mindestens 4 mm auf. Hierdurch wird sichergestellt, dass beim Einpressen die Rohrsegmente nicht radial einfallen. Dies ist erforderlich, um die hohen Torsionsmomente zwischen dem Anbauteil und der Welle zu übertragen, ohne, dass die Verbindung versagt. Häufig wird mit dieser Verbindung auch das Crashverhalten bestimmt, wobei das Anbauteil in das Rohr gedrückt wird. Aufgrund der vielen Einflussgrößen streuen die Crashkräfte sehr stark, wodurch das Rohr platzen kann.

Die Verwendung von dickwandigen Rohren mit einer Wandstärke von 4 mm und mehr führen jedoch zu einem erheblichen Gesamtgewicht der Verbindung von Welle und Stahl- bzw. Aluminiumanbauteil, wodurch der wesentliche Gewichtsvorteil durch die Verwendung einer CFK-Welle beeinträchtigt ist.

Zur Gewichtsreduzierung der Anschlussvorrichtung war es stets das Begehren der Entwickler, die rohrförmigen Anbauteile aus Stahl oder Aluminium dünnwandig auszubilden, um das Gesamtgewicht zu reduzieren. Eine dünnwandige Ausbildung konnte jedoch die Torsionsmomente nicht sicher übertragen und lieferte keine ausreichende Stabilität im Crashfall.

Es ist deshalb die Aufgabe der vorliegenden Erfindung, eine Anschlussvorrichtung für eine Welle zu einem Anbauteil zu gewährleisten, das die im Kraftfahrzeugbau nötigen Torsionsmomente mit der üblichen Sicherheit übertragen kann und gleichzeitig die geforderten Crashanforderungen hinsichtlich der notwendigen Energieaufnahme erfüllt.

Diese Aufgabe wird gelöst durch eine Anschlussvorrichtung gemäß dem Patentanspruch 1.

Hierbei ist vorgesehen, eine Anschlussvorrichtung für eine Welle aus einem Endabschnitt eines Rohrsegments zu bilden, über den die Welle aufschiebbar und auf dessen radialer Außenoberfläche eine Außenverzahnung vorgesehen ist, wobei im Inneren des Endabschnitts des Rohrsegments ein Stützring angeordnet ist.

Die Verwendung eines Stützrings ist dahingehend vorteilhaft, dass der Endabschnitt des Rohrsegments genau in dem Bereich stabilisiert ist, wo auch die Welle angeordnet ist. Der Stützring wird in einer bevorzugten Ausführung in den Endabschnitt des Rohrsegments eingepresst, so dass der Endabschnitt die hohen Radialkräfte beim Aufpressen der Welle auf den Endabschnitt abstützen kann. Der Endabschnitt des Rohrsegments bleibt somit in seiner ursprünglichen Form, obgleich seine Wandstärke gegenüber den im Stand der Technik verwendeten Endabschnitten deutlich reduziert ist. Bevorzugt ist, dass der Stützring aus Stahl gebildet ist.

Die günstige Verwendung des Stützrings führt dazu, dass als Wandstärke für den Endabschnitt ein Maß von 1,2 - 2,5 mm gewählt werden kann, wobei weiter bevorzugt eine Wandstärke von 1,5 - 2,2 mm und noch weiter bevorzugt eine Wandstärke von 1,6 -1,9 mm gewählt wird. Der Außendurchmesser des Stützrings ist erfindungsgemäß minimal größer als der Innendurchmesser des Endabschnitts des Rohrsegments, so dass der Stützring nach dem Einpressen in den Endabschnitt als Presspassung in dem Endabschnitt festgelegt ist. Vorzugsweise wird der Stützring in axialer Richtung mittig in dem Bereich des Endabschnitts angeordnet, in welchem die Außenverzahnung vorgesehen ist.

In einer bevorzugten Ausführung weist der Stützring eine Axialerstreckung von 10 - 20 mm auf, weiter bevorzugt ist eine Axialerstreckung von 10 - 15 mm. Somit ist gewährleistet, dass eine ausreichende Abstützung für die beim Aufpressen der Welle entstehenden Radialkräfte bereitgestellt ist, ohne den Gewichtsvorteil durch die dünnwandige Ausbildung des Endabschnitts des Rohrsegments aufzuheben. Die Gewichtseinsparung eines Rohrsegments beispielsweise mit einer Wandstärke von 1,8 mm beträgt gegenüber denjenigen des Stands der Technik mit einer Wandstärke von 4 mm mindestens 40%.

Bevorzugt ist eine Ausführung der Außenverzahnung des Endabschnitts des Rohrsegments als Rändelung ausgebildet, die durch Rändelfräsen erzeugt ist. Eine rändelgefräste radiale Außenoberfläche bietet eine große Kontaktfläche zu der später aufgeschobenen Welle, so dass hohe Torsionsmomente übertragen werden können, die in jedem Fall eine Größe erreichen, die für den Fahrzeugbau gewünscht ist.

Die Anschlussvorrichtung zeichnet sich ferner dadurch aus, dass Standardrohre zum Einsatz kommen, deren Endabschnitt auf einen vorbestimmten Durchmesser eingezogen ist. Das hat den Vorteil, dass ein vorbestimmtes Rohr, beispielsweise mit einem Durchmesser von 70 mm, auf einen Enddurchmesser von 60 oder 55 mm eingezogen werden kann, je nachdem, welcher Welleninnendurchmesser aufgeschoben werden soll. Hierdurch ist möglich, Gleichteile des Gelenkwellenbaukastens zu verschweißen oder Package-Anforderungen, wie sie im Fahrzeugbau üblich sind, zu erfüllen. Als Rohrsegmente kommen beispielsweise Kardansondergüterohre zum Einsatz. Erfindungsgemäß ist auch an dem Endabschnitt ein Wulst vorgesehen, der eine Sollbruchstelle bildet. Derartige Sollbruchstellen sind vorgesehen, um die Crashanforderungen zu erfüllen, wobei das Bauteil bei einer vorbestimmten Belastung in vorbestimmter Richtung versagt. Der Wulst ist gebildet durch eine sich der Rändelung bzw. Außenverzahnung anschließenden umfänglichen radialen Ausbuchtung.

In einer bevorzugten Ausführung der Erfindung ist ferner vorgesehen, dass in axialer Richtung an den Endabschnitt angrenzend ein Wuchtbereich des Rohrsegments vorgesehen ist, in dem Wuchtgewichte anbringbar sind. Bei einer Verwendung der Anschlussvorrichtung für Gelenkwellen kann somit unmittelbar an dem Bereich des Anschlusses bzw. Adapters die Auswuchtung der Gelenkwelle erfolgen. Wuchtgewichte werden beispielsweise angeschweißt oder auf andere aus dem Stand der Technik bekannte Weise befestigt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

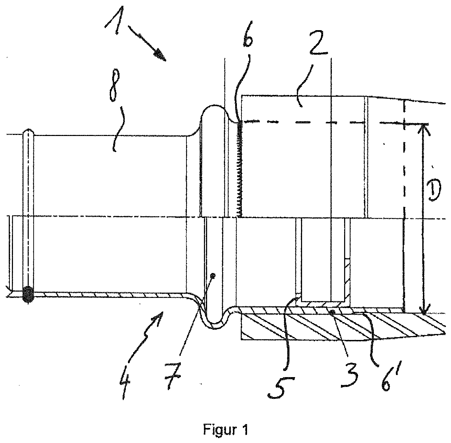

Fig. 1 eine Seitenansicht der erfindungsgemäßen Anschlussvorrichtung teilweise im Schnitt.

Fig. 1 zeigt die Anschlussvorrichtung in einer Seitenansicht, wobei die untere Hälfte geschnitten dargestellt ist. Die Welle 2 ist auf den Endabschnitt 3 des Rohrsegments 4 aufgepresst, so dass die Anschlussvorrichtung 1 in der gezeigten Ausführung in ihrem Endzustand gezeigt ist. Die radiale Außenoberfläche des Endabschnitts 3 des Rohrsegments 4 weist eine Rändelung 6 auf, die sich in axialer Richtung im Wesentlichen von der axialen Abschlusskante der Welle 2 bis zu dem mit dem Bezugszeichen 6' bezeichneten Abschnitt erstreckt. Die gezeigte Ausführung ist beispielhaft schematisch, jedoch ist die bevorzugte Wandstärke des Endabschnitts 3, gemessen an der dicksten Stelle, wo das Bezugszeichen 3 hinweist, nicht größer als 2,5 mm, in der gezeigten Ausführung 1,8 mm. In den Endabschnitt 3 ist der Stützring 5 bis zu einem axialen Mittelbereich der Rändelung 6 eingepresst, wobei die Wandstärke des Stützrings 5 im Wesentlichen der Wandstärke des Endabschnitts entspricht. Zur Gewährleistung einer Presspassung ist der Außendurchmesser des Stützrings 5 minimal größer als der Innendurchmesser des Endabschnitts 3. In axialer Richtung erstreckt sich der Stützring über eine vorab ausgelegte Länge, im konkreten Beispiel 15 mm. Das Rohrsegment 4 der Anschlussvorrichtung 1 weist in einem Bereich, der dem gerändelten Abschnitt des Endabschnitts 3 in axialer Richtung sich anschließt, eine Wulst 7 auf, welche durch radial auswärts gedrücktes Material des Rohrsegments 4 bereitgestellt ist. In axialer Richtung an den Endabschnitt 3 bzw. die Wulst 7 angrenzend ist der Wuchtbereich 8 des Rohrsegments 4 vorgesehen, in dem nicht dargestellte Wuchtgewichte angeschweißt werden. Das Rohrsegment 4 ist in der dargestellten Ausführung aus Stahl, die Welle aus CFK hergestellt.

Zur Abdichtung gegen Verschmutzungen und Feuchtigkeit von außen kann zusätzlich zwischen der Welle 2 und dem Endabschnitt 3 eine Klebe- und Abdichtraupe (nicht gezeigt) vorgesehen sein. Diese würde vorzugsweise im in Umfangsrichtung im Bereich angeordnet, der mit dem Bezugszeichen 6 gekennzeichnet ist.

Die Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei grundsätzlich anders gearteten Ausführungen Gebrauch macht. Es kann beispielsweise vorgesehen sein, den Stützring in axialer Richtung breiter, dafür jedoch dünner auszubilden. Auch ist möglich, den Endabschnitt 3 des Rohrsegments 4 mit einem Durchmesser kleiner als dem mit D dargestellten zu verwenden, indem der Endabschnitt weiter eingezogen wird und somit an Wellen 2 anpassbar ist, die kleiner bauen.

## Patentansprüche

1. Anschlussvorrichtung für eine Welle (2) gebildet aus einem Endabschnitt (3) eines Rohrsegments (4), über den die Welle (2) aufschiebbar und auf dessen radialer Außenoberfläche eine Außenverzahnung vorgesehen ist, wobei im Inneren des Endabschnitts (3) des Rohrsegments (4) ein Stützring (5) angeordnet ist, wobei ein Außendurchmesser des Stützrings (5) größer als ein Innendurchmesser des Endabschnitts (3) ist und der Endabschnitt (3) einen Wulst (7) aufweist, der eine Sollbruchstelle bildet.

2. Anschlussvorrichtung nach Anspruch 1, **dadurch gekennzeichnet, dass** der Endabschnitt (3) dünnwandig mit einer Wandstärke zwischen 1,2 und 2,5mm ausgebildet ist.

3. Anschlussvorrichtung nach zumindest einem der vorigen Ansprüche, **dadurch gekennzeichnet, dass** der Stützring (5) in den Endabschnitt (3) eingepresst ist.

4. Anschlussvorrichtung nach Anspruch 1, **dadurch gekennzeichnet, dass** der Stützring (5) eine Axialerstreckung von 10-20mm aufweist.

5. Anschlussvorrichtung nach zumindest einem der vorigen Ansprüche, **dadurch gekennzeichnet, dass** die Außenverzahnung eine durch Rändelfräsen erzeugte Rändelung (6) ist.

6. Anschlussvorrichtung nach zumindest einem der vorigen Ansprüche, **dadurch gekennzeichnet, dass** der Endabschnitt (3) auf einen vorbestimmten Durchmesser eingezogen ist.

7. Anschlussvorrichtung nach zumindest einem der vorigen Ansprüche, **dadurch gekennzeichnet, dass** in axialer Richtung an den Endabschnitt (3) des Rohrsegments (4) angrenzend ein Wuchtbereich (8) vorgesehen ist, in dem Wuchtgewichte anbringbar sind.

8. Anschlussvorrichtung nach zumindest einem der vorigen Ansprüche, **dadurch gekennzeichnet, dass** das Rohrsegment (4) aus Stahl ist.

## Claims

1. A connecting device for a shaft (2) formed from an end portion (3) of a tube segment (4), over which the shaft (2) can be pushed and on the radial. outer surface of which external teeth are provided, wherein a supporting ring (5) is arranged in the interior of the end portion (3) of the tube segment (4), wherein an external diameter of the supporting ring (5) is greater than an internal diameter of the end portion (3) and the end portion (3) has a bead (7) which forms a predetermined breaking point.

2. A connecting device according to Claim 1, **characterised in that** the end portion (3) is designed to be thin-walled with a wall thickness of between 1.2 and 2.5 mm.

3. A connecting device according to at least one of the preceding claims, **characterised in that** the supporting ring (5) is pressed into the end portion (3).

4. A connecting device according to Claim 1, **characterised in that** the supporting ring (5) has an axial extent of 10-20 mm.

5. A connecting device according to at least one of the preceding claims, **characterised in that** the external teeth are knurling (6) produced by cut knurling.

6. A connecting device according to at least one of the preceding claims, **characterised in that** the end portion (3) is reduced to a predetermined diameter.

7. A connecting device according to at least one of the preceding claims, **characterised in that** a balancing region (8) in which balancing weights can be attached is provided in the axial direction adjoining the end portion (3) of the tube segment (4).

8. A connecting device according to at least one of the preceding claims, **characterised in that** the tube segment (4) is made of steel.

## Revendications

1. Dispositif de connexion destiné à un arbre (2) constitué d'un segment d'extrémité (3), d'un segment de tube (4) sur lequel l'arbre (2) peut être emmanché et sur la surface externe radiale duquel est prévue une denture externe, une bague d'appui (5) étant montée à la partie interne du segment d'extrémité (3) du segment de tube (4), le diamètre externe de la bague d'appui (5) étant supérieur au diamètre interne du segment d'extrémité (3) et le segment d'extrémité (3) comportant un bourrelet (7) qui forme un emplacement de rupture de consigne.

2. Dispositif de connexion conforme à la revendication 1,
**caractérisé en ce que**
le segment d'extrémité (3) a une paroi mince avec une épaisseur de paroi comprise entre 1,2 et 2,5 mm.

3. Dispositif de connexion conforme à zu moins l'une des revendications précédentes,
**caractérisé en ce que**
la bague d'appui (5) est introduite à force dans le segment d'extrémité (3).

4. Dispositif de connexion conforme à la revendication 1,
**caractérisé en ce que**
la bague d'appui (5) a une extension axiale de 10 à 20 mm.

5. Dispositif de connexion conforme à au moins l'une des revendications précédentes,
**caractérisé en ce que**
la denture externe est un moletage (6) obtenu par fraisage.

6. Dispositif de connexion conforme à au moins l'une des revendications précédentes,
**caractérisé en ce que**
le segment d'extrémité (3) est étiré à un diamètre défini.

7. Dispositif de connexion conforme à au moins l'une des revendications précédentes,
**caractérisé en ce qu'**
il est prévu une zone d'équilibrage (8) adjacente au segment d'extrémité (3) du segment de tube (4) en direction axiale, dans laquelle peuvent être montés des poids d'équilibrage.

8. Dispositif de connexion conforme à au moins l'une des revendications précédentes,
**caractérisé en ce que**
le segment de tube (4) est en acier.
